# EUROPÄISCHE PATENTSCHRIFT

(11) **EP 4 306 374 B1**
(45) Veröffentlichungstag und Bekanntmachung des Hinweises auf die Patenterteilung: **25.03.2026**
(21) Anmeldenummer: 23182832.8
(22) Anmeldetag: 30.06.2023
(51) Int. Cl.: B60T 17/22, B60T 13/12, B60T 13/68, B60T 13/14, B60T 17/02, B61H 11/00, B60T 13/66

(54) **ANORDNUNG ZUM LÖSEN EINER BREMSE EINES SCHIENENFAHRZEUGS SOWIE SCHIENENFAHRZEUG**
ASSEMBLY FOR RELEASE OF A BRAKE OF A RAIL VEHICLE, AND RAIL VEHICLE
DISPOSITIF DE DESSERRAGE D'UN FREIN D'UN VÉHICULE FERROVIAIRE ET VÉHICULE FERROVIAIRE

(30) Priorität: 15.07.2022 DE 102022117696
(43) Veröffentlichungstag der Anmeldung: 17.01.2024
(73) Patentinhaber: KNORR-BREMSE Systeme für Schienenfahrzeuge GmbH, 80809 München (DE)
(72) Erfinder: STICKEL, Torsten, 82131 Gauting (DE); KULLEN, Nico, 82205 Gilching (DE); WERMUND, Ulrich, 80469 München (DE)

(56) Entgegenhaltungen:
- EP-B1- 3 176 043
- CN-A- 111 891 924
- US-A- 5 074 624

## Beschreibung

Die Erfindung betrifft eine Anordnung gemäß dem Oberbegriff des Patentanspruchs 1 und ein Schienenfahrzeug mit einer solchen Anordnung.

Schienenfahrzeuge, beispielsweise schienengebundene Nahverkehrsmittel wie z.B. Straßenbahnen, werden üblicherweise über federkraftbetätigte Bremsaktuatoren (auch als "passive" Bremsaktuatoren bezeichnet) betätigt. Die Bremsen können beispielsweise als Scheibenbremsen ausgebildet sein, in die während des Bremsvorgangs ein Bremssattel oder eine Bremszange eingreift. Bei einem passiven Bremsaktuator ist der Bremsaktuator mittels einer Feder derart vorgespannt, dass die Bremse durch die Federkraft selbsttätig einbremst. Zum Lösen der Bremse wird der Bremsaktuator mittels einer gegenläufigen Kraftbeaufschlagung geöffnet.

Hierbei kann eine zur betriebsmäßigen Ansteuerung des Bremsaktuators benötigte Kraftbeaufschlagung durch einen mittels eines Hydraulikfluids auf den Bremsaktuator ausgeübten Drucks bereitgestellt werden. Alternativ kann die Kraftbeaufschlagung auch mittels eines pneumatischen Übertragungssystems und/oder mittels eines elektrisch angetriebenen Aktuators bereitgestellt werden.

Im Falle eines Fehlers im Betriebsbremssystem, z.B. einem Schlauchabriss oder dem Ausfall einer Pumpe bzw. eines Kompressors, ist üblicherweise eine redundante Ansteuerung des Bremsaktuators, z.B. mittels eines hydraulischen Hilfssystems, vorgesehen. Dies soll ohne Beeinträchtigung der Allgemeinheit am Beispiel eines federkraftbetätigten "passiven" Bremsaktuators eines Schienenfahrzeugs erläutert werden.

Bei einem solchen Schienenfahrzeug bremst im drucklosen Zustand der Betriebsbremse der Federspeicherzylinder die Bremse mittels Federkraft selbsttätig ein.

Dieses Verhalten der Bremse erfordert wie oben erläutert Hilfslösemittel, um den passiven Bremsaktuator bei Ausfall des normalen Betriebsbremskreises lösen zu können, damit das Fahrzeug bewegbar - beispielsweise abschleppbar - ist. Ein pneumatisch arbeitendes Bremssystem mit einem pneumatischen Hilfslösesystem ist beispielsweise aus der deutschen Offenlegungsschrift DE10 2012 202761 A1 bekannt.

Die CN 111 891 924 A betrifft eine Monorail-Kranlokomotive und ein hydraulisches System, das im Bergbau für den Transport von schweren Lasten eingesetzt wird. Das hydraulische System ermöglicht die automatische Steuerung der Parkbremse, Echtzeit-Parkbremsung und Notbremsung, was zu einer hohen Automatisierungsgrad führt. Durch die Verwendung einer Kompressionszylinderfunktion wird der sichere Betrieb der Lokomotive gewährleistet, indem ausreichender Druck auf das Reibrad ausgeübt wird. Das System umfasst verschiedene hydraulische Steuerventile, einen Öltank, eine hydraulische Pumpe, einen hydraulischen Motor und einen hydraulischen Akkumulator. Die Verbesserungen gegenüber herkömmlichen Systemen umfassen eine erhöhte Automatisierung, Sicherheit und Effizienz bei der Bewegung des Monorail-Krans.

Das Dokument US 5 074 624 A beschreibt ein Schienenfahrzeug mit einem hydraulischen Druckversorgungssystem, das sowohl elektrohydraulische Bremsen als auch hydropneumatische Federungen versorgt. Jedes Drehgestell des Fahrzeugs verfügt über eine Druckversorgungseinheit, die durch parallele Ventile Druck an Bremsen und Federungen liefert. Dieses System reduziert Kosten und Aufwand für die Konstruktion der Bremsen und Federungen erheblich. Durch die Integration von Pumpen, Druckschaltern und Steuervorrichtungen in einer Einheit wird die Effizienz und Funktionalität des Schienenfahrzeugs verbessert.

Aus der EP 3 176 043 B1 ist eine Einrichtung zur Betätigung passiver Bremsaktuatoren eines Fahrzeugs bekannt. Die Einrichtung besteht aus einer Bremsdruckeinheit mit einer ersten und einer zweiten Druckquelle. Im Falle eines Ausfalls der normalen Ansteuerung sind Hilfslösemittel vorhanden, um die Bremsen zu lösen. Ein Umschaltventil, das von einer separaten Hilfslösesteuerung gesteuert wird, verbindet die zweite Druckquelle direkt mit dem Betriebsbremskreis. Die hydraulische Ausführung mit elektromagnetisch betätigbaren Mehrwegeventilen ermöglicht eine präzise Drucksteuerung. Die passive Bremsaktuator-Funktionalität umfasst Federspeicherzylinder zur Betätigung und Lösung der Bremssättel.

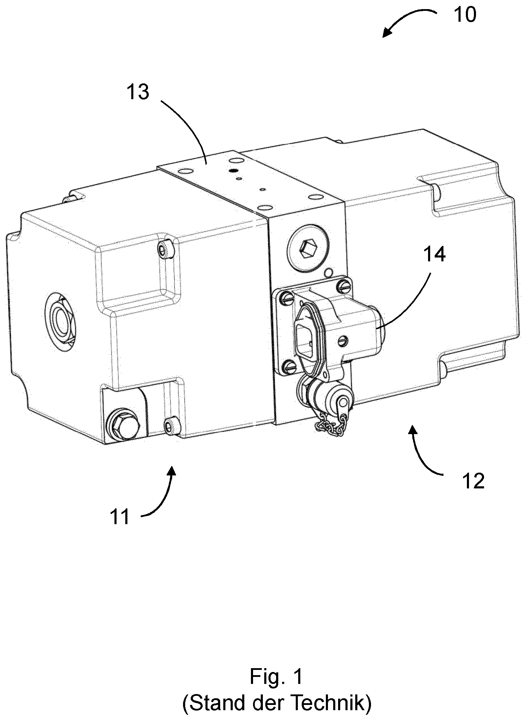

Gemäß dem allgemein bekannten Stand der Technik wird zum Hilfslösen eines passiven Bremsaktuators ein separates Hilfssystem, z.B. in Form eines hydraulisch arbeitenden Hilfslösesystems, verwendet, welches hydraulisch einen (Hilfs-)Druck zur Verfügung stellt, mit dem die Bremsaktuatoren bei Bedarf angesteuert werden können. Hierfür kann in den Federspeicherzylindern der Bremsaktuatoren ein separater Kolben vorgesehen sein, über welchen das Hilfslösen des Bremsaktuators durchgeführt wird. Das Hilfslösen erfolgt also per separatem Hilfslösekreis durch einen entsprechenden Druckaufbau im passiven Bremsaktuator. Figur 1 zeigt beispielhaft ein für einen Hilfslösekreis eingesetztes Hilfslösegerät 10 der Anmelderin, das unter der Bezeichnung "Hilfslösegerät EDHL" vertrieben wird. Man erkennt einen ersten Bereich 11, der eine Pumpe umfasst, und einen zweiten Bereich 12, der einen elektrischen Motor beinhaltet. Am Gehäuse des Hilfslösegeräts 10, beispielsweise am zweiten Bereich 12, ist ein elektrischer Anschluss 14 vorgesehen. Eine Steuerplatte 13 stellt hydraulische Anschlüsse bereit und bestimmt die hydraulische Funktionsweise des Hilfslösegeräts 10 durch entsprechend miteinander verbundene Ventile.

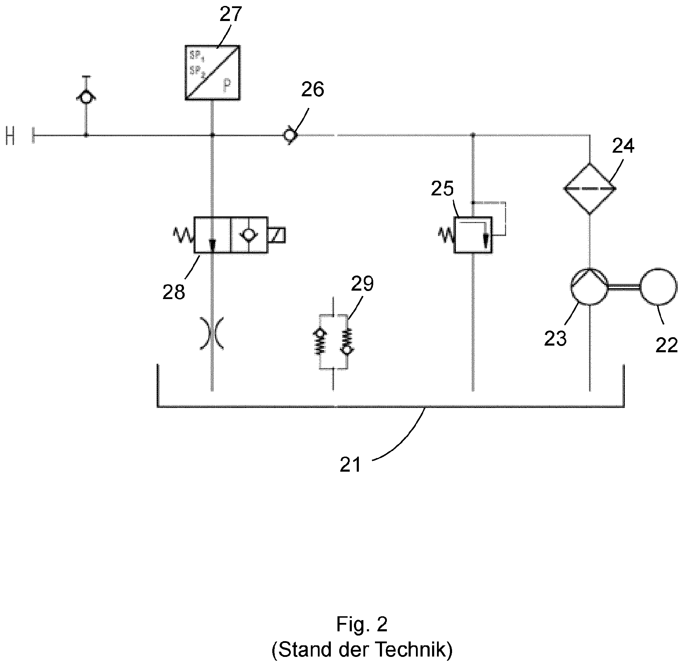

Die Funktionsweise des bekannten Hilfslösegerät 10 wird anhand des in Figur 2 angedeuteten Schaltungsschemas erläutert. In einem Tank 21 wird ein Hydraulikfluid, z.B. ein Hydrauliköl, vorgehalten. Der Tank 21 steht mit einer mittels eines Motors 22 angetriebenen Pumpe 23 in Verbindung. Mittels der Pumpe 23 wird das Hydraulikfluid durch einen Filter 24 in einen Hydraulikkreis gepumpt und an einem Ausgang H des Hilfslösegeräts 10 bereitgestellt. Ein Überdruckventil 25 gewährleistet die Einhaltung eines zulässigen Maximaldrucks im Hydraulikkreis, indem es diesen bei Überschreitung zum Tank 21 hin öffnet. Mittels eines Rückschlagventils 26 wird ein Zurückströmen des Hydraulikfluids verhindert. Die Aktivierung der Hilfslösefunktion erfolgt üblicherweise mittels direkten Einschaltens des Motors 22 über ein - nicht dargestelltes - Motorschütz. Das Einschalten kann beispielsweise durch einen entsprechenden Schalter am Schienenfahrzeug (z.B. im Führerstand des Schienenfahrzeugs) oder - im Falle eines Zugverbands - durch einen entsprechenden Schalter an einem mit dem Schienenfahrzeug gekoppelten weiteren Schienenfahrzeug stattfinden. Ein Druckschalter 27 schaltet den Motor 22 bei gestartetem Hilfslösevorgang über das Motorschütz aus, wenn der Hilfslösedruck erreicht ist. Ein Druckabbau im Hydraulikkreis erfolgt im nicht-bestromten Zustand über ein Ventil 28, das im bestromten Zustand den Rückfluss des Hydraulikfluids aus dem Hydraulikkreis sperrt und damit den Druck am Ausgang H hält. Eine Be- und Entlüftungseinheit 29 dient schließlich zum Be- und Entlüften des Tanks 21.

Da ein solches Hilfslösegerät 10 im Vergleich zum Betriebsbremssystem für deutlich geringere Einsatzzahlen vorgesehen ist, wird es üblicherweise recht einfach ausgebildet. Wie beschrieben erfolgt ein Aufbau des hydraulischen Drucks direkt durch bedarfsweise Ansteuerung des Motors 22 der Pumpe 23. Entsprechend benötigt ein Hilfslösegerät keine elektronische Ansteuerung und keinen Druckspeicher.

Oftmals werden auch an den Schienenfahrzeugbau steigende Anforderungen hinsichtlich Baugrößen und Gewicht gestellt, die insgesamt zu einer Verkleinerung der einzusetzenden Komponenten führen.

Ausgehend von einer Anordnung der eingangs genannten Art stellt sich die Aufgabe, den Funktionsumfang einer solchen Anordnung bei gleichbleibend hoher Zuverlässigkeit und Sicherheit und trotz Limitierungen bezüglich Baugröße und Gewicht zu erhöhen.

Diese Aufgabe wird durch eine Anordnung nach Anspruch 1 und ein Schienenfahrzeug mit einer solchen Anordnung nach Anspruch 8 gelöst. Vorteilhafte Ausführungen sind in den abhängigen Ansprüchen angegeben.

Gemäß einem Aspekt der Erfindung wird somit eine Anordnung zum Lösen einer Bremse eines Schienenfahrzeugs mit einer elektro-hydraulischen Versorgungs- und Steuereinrichtung vorgeschlagen, die eine motorbetriebene Pumpe umfasst, die mit einem ein Hydraulikfluid vorhaltenden Tank verbunden ist, wobei die elektro-hydraulische Versorgungs- und Steuereinrichtung einen ersten Ausgang zum Belegen zumindest eines Bremsaktuators der Bremse mit einem durch das Hydraulikfluid ausgeübten Druck aufweist.

Erfindungsgemäß ist vorgesehen, dass die elektro-hydraulische Versorgungs- und Steuereinrichtung derart mit einem Druckspeicher in Wirkverbindung steht, dass der Druckspeicher einerseits mit der Pumpe und andererseits mit dem ersten Ausgang der elektro-hydraulischen Versorgungs- und Steuereinrichtung verbunden ist, und die elektro-hydraulische Versorgungs- und Steuereinrichtung einen zweiten Ausgang zum Belegen zumindest eines Hydraulikaktuators, z.B. eines Hydraulikzylinders oder eines hydraulisch betätigten Drehantriebs, mit dem durch das Hydraulikfluid ausgeübten Druck aufweist, wobei der Hydraulikaktuator zum Ausüben einer Zusatzfunktion des Schienenfahrzeugs eingerichtet ist.

Die Erfindung macht sich zur Lösung der oben genannten Aufgabe folglich die Integration zumindest zweier bisher getrennt ausgeführter Systeme eines Schienenfahrzeugs zunutze, indem eine an sich zum Hilfslösem eines Bremsaktuators ausgebildete elektro-hydraulische Versorgungs- und Steuereinrichtung zusätzlich auch zur Ansteuerung eines - nicht zur Bremsfunktion des Schienenfahrzeugs dienenden - Hydraulikaktuators verwendet wird, der eine Zusatzfunktion des Schienenfahrzeugs ansteuert. Eine solche Zusatzfunktion kann beispielsweise das Heben und Senken einer in ihrer vertikalen Position verstellbaren Magnetschienenbremse sein. Die Verstellung der Position einer Magnetschienenbremse (Hoch- bzw. Tieflage) ist beispielsweise für Straßenbahnen interessant, die einerseits auf dem Straßenbahnnetz (mit Magnetschienenbremse in Tieflage) und andererseits auf dem Nahverkehrsnetz (mit Magnetschienenbremse in Hochlage) betrieben werden. Alternativ oder zusätzlich kann die Zusatzfunktion auch ein Ansteuern von bewegbaren Karosserieelementen des Schienenfahrzeugs sein (z.B. Ausfahren bzw. Einklappen einer Einstiegshilfe, wie z.B. einer Treppe, einer Stufe oder einer Rampe, das Ansteuern einer Türmechanik, das Verstellen von Lüftungsklappen etc.) oder ein Ansteuern einer Kupplung des Schienenfahrzeugs sein. Auch die Ansteuerung mehrerer Zusatzfunktionen neben der auf den Bremsaktuator bezogenen Hilfslösefunktion ist im Rahmen der Erfindung denkbar.

Die erfindungsgemäße Anordnung nimmt damit quasi (mindestens) eine Doppelfunktion wahr, indem eine Hilfslösefunktion und eine Zusatzfunktion des Schienenfahrzeugs über denselben Hydraulikkreis bedient werden. Dazu nimmt die Erfindung zunächst den - vermeintlichen - Nachteil einer zusätzlichen Komponente in Form des Druckspeichers in Kauf, bei dem es sich beispielsweise um einen Membranspeicher, einen Kolbenspeicher oder einen Federspeicher handeln kann und der als in die elektro-hydraulische Versorgungs- und Steuereinrichtung integrierte oder separate Komponente ausgebildet sein kann. Da aus dem Druckspeicher allerdings beide Systeme, nämlich das auf den Bremsaktuator gerichtete System und das auf die Zusatzfunktion gerichtete System, mit Hydraulikfluid auf geeigneter Druckebene versorgt werden, kann das Vorsehen eines zusätzlichen Bauteils durch Einsparung getrennt ausgebildeter Hydrauliksysteme kompensiert werden. Auch kann die Motorsteuerung vergleichsweise einfach ausgebildet sein, da sie nunmehr nur eine Aufladefunktion des Druckspeichers erfüllen muss, um den Druck im Hydrauliksystem in einem vorgegebenen Druckbereich, z.B. 120 - 150bar, halten zu können. Bei einer bloßen Kombination der bisher separat ausgeführten Systeme "Hilfslösen" (ohne Druckspeicher) und beispielsweise der Ansteuerung einer Hubvorrichtung für eine Magnetschienenbremse (üblicherweise mit Druckspeicher) müsste nämlich prinzipiell eine verschiedenartige Ansteuerung des Motors stattfinden. Einerseits müsste eine direkte Ansteuerung für die Druckeinspeisung in den Hydraulikkreis der Hilfslösefunktion erfolgen, während andererseits gleichzeitig eine elektronisch gesteuerte Ansteuerung zur Aufladung des Druckspeichers für die Hubvorrichtung vorgesehen sein müsste. Dies würde zwei elektronische Steuerungen voraussetzen, wodurch die Anordnung hinsichtlich ihrer Baugröße und hinsichtlich ihrer Kosten unattraktiver werden würde. Die vorgeschlagene Schaltung vereint in einfacher und vorteilhafter Weise beide Funktionen in sich.

Erfindungsgemäß ist die elektro-hydraulische Versorgungs- und Steuereinrichtung derart ausgebildet, dass der erste und der zweite Ausgang unabhängig voneinander mit dem durch den Druckspeicher bereitgestellten Druck beaufschlagbar sind.

Auf diese Weise kann die Anordnung besonders flexibel arbeiten. Konkret kann hierzu beispielsweise vorgesehen sein, dass der erste und der zweite Ausgang der elektro-hydraulischen Versorgungs- und Steuereinrichtung jeweils mittels zumindest eines Ventils, vorzugsweise jeweils mittels eines 3/2-Wege-Ventils, mit dem Druckspeicher verbindbar ist. Alternativ kann die gewünschte Funktion auch mittels einer anderen Ventilverschaltung erreicht werden, beispielsweise mittels je zweier seriell verbundener und synchron angesteuerter 2/2-Wege-Ventile.

Die Ansteuerung der Ventile und/oder des Motors der Pumpe kann beispielsweise direkt oder über eine elektronische Bremssteuerung erfolgen.

Gemäß einer vorteilhaften Ausführungsform der erfindungsgemäßen Anordnung kann vorgesehen sein, dass die elektro-hydraulische Versorgungs- und Steuereinrichtung an ihrem ersten Ausgang zum Bereitstellen eines Drucks zum Hilfslösen einer federkraftbetätigten Bremse des Schienenfahrzeugs ausgebildet ist.

Diese Ausführungsform bezieht sich auf die eingangs beispielhaft beschriebene Funktion des Hilfslösens einer z.B. durch eine Fehlfunktion des Betriebsbremssystems dauerhaft gebremsten passiven Bremse eines Schienenfahrzeugs, z.B. einer Straßenbahn. Die Hilfslösefunktion ermöglicht auch in einem solchen Fall z.B. ein Abschleppen des Schienenfahrzeugs.

Eine weitere vorteilhafte Ausführungsform der erfindungsgemäßen Anordnung sieht schließlich vor, dass die elektro-hydraulische Versorgungs- und Steuereinrichtung einen Druckschalter aufweist, der zur Ansteuerung eines die Pumpe antreibenden Motors in Abhängigkeit des von dem Druckspeicher vorgehaltenen Drucks des Hydraulikfluids ausgebildet ist.

Der Druckschalter kann hierbei den Motor - vorzugsweise über ein Motorschütz - direkt ansteuern. Bei Verwendung eines elektronisch kommutierten Motors kann die Ansteuerung auch ohne Zwischenschaltung eines separaten Schützes erfolgen. Alternativ zu einer direkten Ansteuerung des Motors kann das Signal des Druckschalters auch mittels der Bremssteuerung erfasst und verarbeitet werden; die Bremssteuerung steuert dann wiederum den Motor an.

Eine weitere vorteilhafte Ausführungsform der erfindungsgemäßen Anordnung sieht schließlich vor, dass der mit dem zweiten Ausgang verbundene Hydraulikzylinder zum Verstellen der Position einer Magnetschienenbremse des Schienenfahrzeugs eingerichtet ist. Alternativ oder zusätzlich kann zudem vorgesehen sein, dass der mit dem zweiten Ausgang verbundene Hydraulikaktuator zum Ansteuern von bewegbaren Karosserielementen und/oder einer Kupplung des Schienenfahrzeugs eingerichtet ist.

In einem anderen Aspekt wird die oben genannte Aufgabe auch durch ein Schienenfahrzeug mit einer Anordnung gelöst, die nach einem der Ansprüche 1 - 8 ausgebildet ist. Hinsichtlich der Funktionsweise und der Vorteile eines solchen Schienenfahrzeugs wird auf die obigen Ausführungen verwiesen.

Bei dem Schienenfahrzeug kann es sich um ein angetriebenes oder nichtangetriebenes Fahrzeug handeln. Konkret kann es sich beispielsweise um ein Schienenfahrzeug einer Straßenbahn, eines Personenzuges, einer Metro, eines Monorails oder um einen elektrischen Trieb- oder Steuerwagen handeln.

Die Erfindung wird nachfolgend anhand eines Ausführungsbeispiels näher erläutert. Hierbei sind identische oder vergleichbare Komponenten mit gleichen Bezugszeichen versehen.

Es zeigen:
- Fig. 1: ein Ausführungsbeispiel eines bekannten Hilfslösegerätes;
- Fig. 2: ein beispielhaftes Schema der hydraulischen Funktionsweise des bekannten Hilfslösegerätes;
- Fig. 3: eine schematische Darstellung eines Schienenfahrzeugs mit einer Anordnung zum Ansteuern einer Bremse des Schienenfahrzeugs;
- Fig. 4: ein beispielhaftes Schema der hydraulischen Funktionsweise eines Ausführungsbeispiels einer Anordnung zum Ansteuern einer Bremse; und
- Fig. 5: eine schematische Darstellung eines Drehgestells eines Schienenfahrzeugs mit einer hinsichtlich ihrer vertikalen Position verstellbaren Magnetschienenbremse.

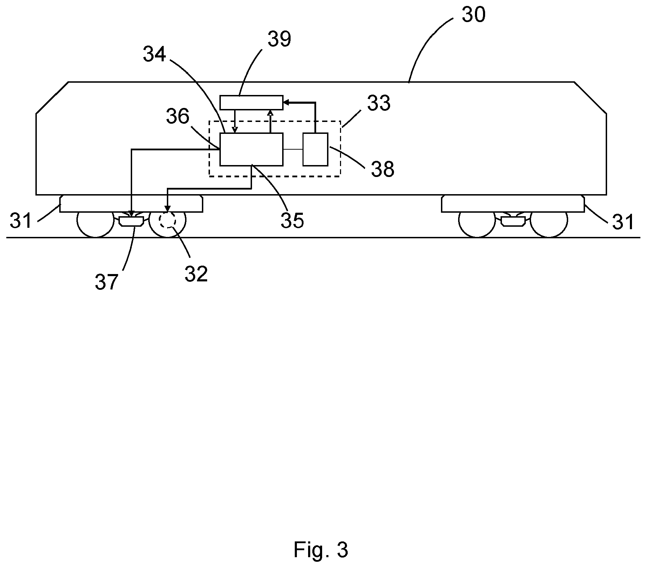

**Fig. 3** zeigt in höchstschematischer Darstellung ein Schienenfahrzeug 30, bei dem es sich z.B. um einen angetriebenen oder einen nicht-angetriebenen Wagen einer Straßenbahn handeln kann. Das Schienenfahrzeug 30 kann hierbei einzeln oder oder Teil eines Verbands von Schienenfahrzeugen (nicht dargestellt) betrieben werden.

Das in Fig. 3 gezeigte Schienenfahrzeug 30 besitzt lediglich beispielhaft zwei Drehgestelle 31 mit jeweils zwei Radsätzen. Die Räder des Schienenfahrzeugs 30 können im dargstellten Beispiel durch in Fig. 3 lediglich schematisch angedeutete Scheibenbremsen 32 gebremst werden. Hierzu ist ein (in der Figur nicht dargestelltes) Betriebsbremssystem vorgesehen, das beispielsweise hydraulisch oder pneumatisch arbeitet. Beispielhaft sei angenommen, dass das Betriebsbremssystem des Schienenfahrzeugs 30 federkraftbetätigte "passive" Bremsaktuatoren umfasst, die im nicht angesteuerten Zustand die Räder des Schienenfahrzeugs 30 bremsen.

Im Fehlerfall des Betriebsbremssystems werden die Räder des Schienenfahrzeugs 30 über die jeweiligen passiven Bremsaktuatoren festgehalten, so dass ein Bewegen des Schienenfahrzeugs verhindert wird. Für einen solchen Fall ist eine Anordnung 33 mit einer elektro-hydraulischen Versorgungs- und Steuereinrichtung 34 vorgesehen, die zum hilfsweisen Lösen der Bremse des Schienenfahrzeugs 30 eingerichtet ist. Hierzu stellt die elektro-hydraulische Versorgungs- und Steuereinrichtung 34 im Bedarfsfall einen hydraulisch erzeugten Druck an einem ersten Ausgang 35 bereit, mit dem die Bremsaktuatoren entgegen der Federspannung beaufschlagt und damit die Bremsen gelöst werden.

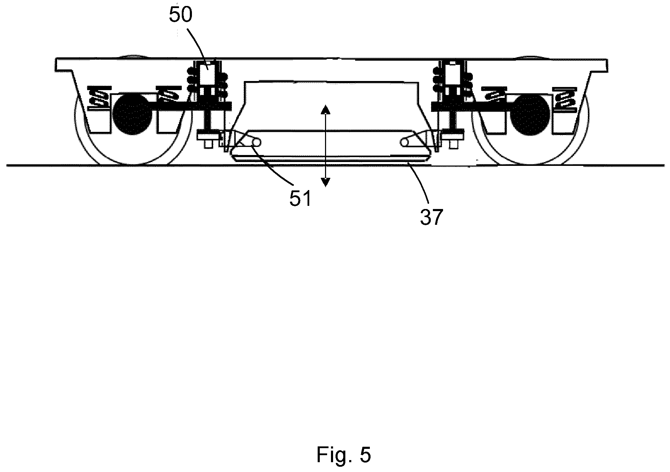

Daneben umfasst die elektro-hydraulische Versorgungs- und Steuereinrichtung 34 auch einen zweiten Ausgang 36, an dem ebenfalls ein hydraulisch erzeugter Druck bereitgestellt werden kann, um eine Zusatzfunktion des Schienenfahrzeugs 30 anzusteuern. Lediglich beispielhaft ist in Fig. 3 der zweite Ausgang 36 mit einem Hydraulikaktuator einer Hubeinrichtung für eine Magnetschienenbremse 37 verbunden, um diese von einer ersten Position (Tiefstellung) in eine zweite Position (Hochstellung) bewegen zu können. Ein detaillierteres Ausführungbeispiel eines Drehgestells 31 mit einer Magnetschienenbremse 37 ist auch in **Fig. 5** gezeigt. Man erkennt die mit dem zweiten Ausgang 36 der elektro-hydraulischen Versorgungs- und Steuereinrichtung 34 verbundenen Hydraulikaktuatoren 50, die im vorliegenden Beispiel als Hydraulikzylinder ausgebildet sind. Diese bewegen über Ansteuerhebel 51 die Magnetschienenbremse 37 wie mittels eines Doppelpfeils angedeutet von einer ersten Position in eine zweite Position und umgekehrt.

Zur Bereitstellung des hydraulischen Drucks umfasst die Anordnung 33 einen Druckspeicher 38 der in Fig. 3 lediglich beispielhaft als von der elektro-hydraulischen Versorgungs- und Steuereinrichtung 34 separate Komponente dargestellt ist. Alternativ kann der Druckspeicher 38 auch in die der elektro-hydraulische Versorgungs- und Steuereinrichtung 34 integriert sein. Mittels einer Bremssteuerung 39, die vorzugsweise elektronisch und/oder computergesteuert ausgebildet sein kann, wird die Funktion der Anordnung 33 in das Bremssystem des Schienenfahrzeugs 30 eingebunden. Beispielsweise dient die Bremssteuerung zum geregelten Aufladen des Druckspeichers 38 auf einen gewünschten hydraulischen Druck (z.B. im Bereich von 120-150 bar).

In Abweichung zur lediglich schematischen Darstellung der Figur 3 können die Anordnung 33 und insbesondere die elektro-hydraulische Versorgungs- und Steuereinrichtung 34 aufgrund ihrer kompakten Bauweise vorzugsweise auch im Drehgestell 31 montiert sein.

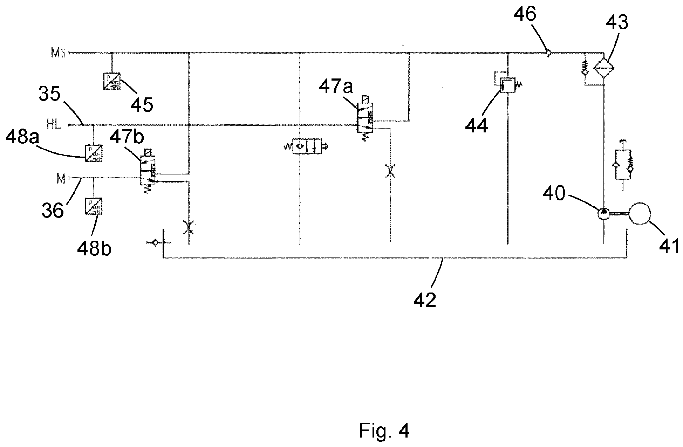

Die Funktionsweise der Anordnung 33, insbesondere der elektro-hydraulischen Versorgungs- und Steuereinrichtung 34, wird nachfolgend unter Hinzunahme der **Fig. 4** erläutert. Hierzu illustriert Fig. 4 die in der elektro-hydraulischen Versorgungs- und Steuereinrichtung 34 integrierte Ventiltechnik eines Hydraulikkreises. Eine Pumpe 40 wird von einem Motor 41 angetrieben, um ein Hydraulikfluid, z.B. ein Hydrauliköl, ausgehend von einem Tank 42 zu fördern und dem Hydraulikkreis über einen Filter 43 zuzuführen. Ein Überdruckventil 44 dient als Überlastungsschutz und führt einen etwaigen Überdruck wieder zurück in den Tank 42. Über einen Einlassanschluss MS der elektro-hydraulischen Versorgungs- und Steuereinrichtung 34 ist der - nicht weiter dargestellter - hydraulischer Druckspeicher 38 (vgl. Fig. 3) angeschlossen. Ein zugeordneter Druckschalter 45 gibt für die Bremssteuerung 39 (vgl. Fig. 3) ein Signal für den momentanen Druck am Ausgang des Druckspeichers 38 aus, so dass die Bremssteuerung 39 durch Ein- und Ausschalten des Motors 41 den Druck im Druckspeicher 39 in dem gewünschten Bereich halten kann. Alternativ kann auch eine direkte Ansteuerung des Motors 41 bzw. eines Motorschützes erfolgen. Ein Rückschlagventil 46 verhindert ein Rückströmen des gepumpten Hydraulikfluids.

Ein erstes 3/2-Wege-Ventil 47a dient durch elektromagnetische Betätigung mittels eines ersten Steuersignals der Bremssteuerung 39 zu einem Druckaufbau an dem ersten Ausgang 35 ("HL"), der mit einem Bremsaktuator des Schienenfahrzeugs 30 verbunden ist. Über diesen ersten Ausgang 35 kann beispielsweise wie oben beschrieben eine Hilfslösefunktion einer Bremse des Schienenfahrzeugs 30 betrieben werden. Ein zweites 3/2-Wege-Ventil 47b dient durch elektromagnetische Betätigung mittels eines zweiten Steuersignals der Bremssteuerung 39 zu einem Druckaufbau an dem zweiten Ausgang 36 ("M"), der mit einem Hydraulikaktuator des Schienenfahrzeugs 30 verbunden ist. Über diesen zweiten Ausgang 36 wird eine Zusatzfunktion des Schienenfahrzeugs 30, die nicht die Bremssteuerung betrifft, betrieben. Beispielsweise kann über den zweiten Ausgang 36 wie oben beschrieben eine Hubeinrichtung einer Magnetschienenbremse oder eine Einstiegshilfe (Treppe, Stufe, Rampe etc.) des Schienenfahrzeugs 30 betrieben werden. Die Ventile 47a, 47b können unabhängig voneinander - einzeln oder gleichzeitig - angesteuert werden, so dass die Funktionen an den Ausgängen der elektro-hydraulischen Versorgungs- und Steuereinrichtung 34 sehr flexibel betrieben werden können. Es ist zudem auch möglich, zusätzlich zu der einen Zusatzfunktion weitere Zusatzfunktionen zu betreiben. Hierfür müssen in entsprechender Weise lediglich weitere Ausgänge an der elektro-hydraulischen Versorgungs- und Steuereinrichtung 34 vorgesehen werden.

Druckschalter 48a, 48b bzw. Drucksensoren überwachen den an dem jeweiligen Ausgang 35 bzw. 36 anliegenden Druck; das seitens der Sensoren abgegebene Signal kann beispielsweise zur Rückmeldung (z.B. "Bremse hilfsgelöst") an den Führerstand des Schienenfahrzeugs weitergeleitet werden.

Anstelle der in Fig. 4 beispielhaft dargestellten Verschaltung des Hydraulikkreises können selbstverständlich auch alternative - gleichwirkende - Verschaltungen eingesetzt werden. Beispielsweise können die 3/2-Wege-Ventile 47a, 47b jeweils durch zwei seriell geschaltete und synchron angesteuerte 2/2-Wege-Ventile ersetzt werden, ohne den Umfang der Erfindung zu verlassen.

Zusammengefasst übernimmt die beschriebene Anordnung, insbesondere die elektro-hydraulische Versorgungs- und Steuereinrichtung 34, eine Doppelfunktion, indem einerseits eine bremsenbezogene Hilfslösefunktion und andererseits eine (nichtbremsenbezogene) Zusatzfunktion des Schienenfahrzeugs betrieben wird. Beide Funktionen werden aus dem gleichen Druckspeicher bedient.

Die Versorgung der bremsenbezogenen Hilfslösefunktion aus dem hydraulischen Druckspeicher ist in vorteilhafter Weise vergleichsweise leistungsfähig, so dass auch größere Verbraucher schnell ausgelöst werden können. So ist auch bei einem Ausfall des Motors der Pumpe eine gewisse Anzahl von Ansteuervorgängen der bremsenbezogenen Hilfslösefunktion und/oder der Zusatzfunktion möglich, bis der Druckspeicher erschöpft ist.

Die vorgeschlagene elektrohydraulische Schaltung zeichnet sich durch Einfachheit und Robustheit aus und ist damit äußerst zuverlässig. Durch die Integration mehrerer Funktionen in eine Einrichtung können zudem Gewicht und Baugröße eingespart werden. Beispielsweise lässt sich die elektrohydraulische Schaltung in einer elektro-hydraulischen Versorgungs- und Steuereinrichtung der 100mm-Klasse (100mm hoch, geeignet zur Anbindung in Drehgestelle von Niederflur-Straßenbahnen) integrieren.

Die Erfindung ist nicht auf das vorstehend beschriebene Ausführungsbeispiel beschränkt. Es sind vielmehr auch Abwandlungen hiervon denkbar, welche vom Schutzbereich der nachfolgenden Ansprüche mit umfasst sind.

### BEZUGSZEICHENLISTE

- 10: Hilfslösegerät
- 11: erster Bereich des Hilfslösegeräts
- 12: zweiter Bereich des Hilfslösegeräts
- 13: Steuerplatte
- 14: elektrischer Anschluss
- 21: Tank
- 22: Motor
- 23: Pumpe
- 24: Filter
- 25: Überdruckventil
- 26: Rückschlagventil
- 27: Druckschalter
- 28: Ventil
- 29: Be- und Entlüftungseinheit
- 30: Schienenfahrzeug
- 31: Drehgestell
- 32: Scheibenbremse
- 33: Anordnung
- 34: elektro-hydraulische Versorgungs- und Steuereinrichtung
- 35: erster Ausgang
- 36: zweiter Ausgang
- 37: Magnetschienenbremse
- 38: Druckspeicher
- 40: Pumpe
- 41: Motor
- 42: Tank
- 43: Filter
- 44: Überdruckventil
- 45: Druckschalter
- 46: Rückschlagventil
- 47a, 47b: 3/2-Wege-Ventile
- 48a, 48b: Druckschalter
- 50: Hydraulikaktuator
- 51: Ansteuerhebel

## Patentansprüche

1. Anordnung (33) zum Lösen einer Bremse eines Schienenfahrzeugs (30) mit einer elektro-hydraulischen Versorgungs- und Steuereinrichtung (34), die eine motorbetriebene Pumpe (40) umfasst, die mit einem ein Hydraulikfluid vorhaltenden Tank (42) verbunden ist, wobei die elektro-hydraulische Versorgungs- und Steuereinrichtung (34) einen ersten Ausgang (35) zum Belegen zumindest eines Bremsaktuators der Bremse mit einem durch das Hydraulikfluid ausgeübten Druck aufweist, wobei
- die elektro-hydraulische Versorgungs- und Steuereinrichtung (34) derart mit einem Druckspeicher (38) in Wirkverbindung steht, dass der Druckspeicher (38) einerseits mit der Pumpe (40) und andererseits mit dem ersten Ausgang (35) der elektro-hydraulischen Versorgungs- und Steuereinrichtung (34) verbunden ist; und
- die elektro-hydraulische Versorgungs- und Steuereinrichtung (34) einen zweiten Ausgang (36) zum Belegen zumindest eines Hydraulikaktuators (50) mit dem durch das Hydraulikfluid ausgeübten Druck aufweist, wobei der Hydraulikaktuator (50) zum Ausüben einer Zusatzfunktion des Schienenfahrzeugs (30) eingerichtet ist; und
**dadurch gekennzeichnet, dass**
- die elektro-hydraulische Versorgungs- und Steuereinrichtung (34) derart ausgebildet ist, dass der erste Ausgang (35) und der zweite Ausgang (36) unabhängig voneinander mit dem durch den Druckspeicher (38) bereitgestellten Druck beaufschlagbar sind.

2. Anordnung (33) nach Anspruch 1,
**dadurch gekennzeichnet, dass**
- der erste Ausgang (35) und der zweite Ausgang (36) der elektro-hydraulischen Versorgungs- und Steuereinrichtung (34) jeweils mittels zumindest eines Ventils (47a, 47b), vorzugsweise jeweils mittels eines 3/2-Wege-Ventils, mit dem Druckspeicher (38) verbindbar sind.

3. Anordnung (33) nach einem der vorangehenden Ansprüche,
**dadurch gekennzeichnet, dass**
- die elektro-hydraulische Versorgungs- und Steuereinrichtung (34) an ihrem ersten Ausgang (35) zum Bereitstellen eines Drucks zum Lösen einer federkraftbetätigten Bremse des Schienenfahrzeugs (30) ausgebildet ist.

4. Anordnung (33) nach einem der vorangehenden Ansprüche,
**dadurch gekennzeichnet, dass**
die Anordnung (33) zum Einbau in ein Drehgestell (31) des Schienenfahrzeugs (30) ausgebildet ist.

5. Anordnung (33) nach einem der vorangehenden Ansprüche,
**dadurch gekennzeichnet, dass**
- die elektro-hydraulische Versorgungs- und Steuereinrichtung (34) einen Druckschalter (45) aufweist, der zur Schaltung eines die Pumpe (40) antreibenden Motors (41) in Abhängigkeit des von dem Druckspeicher (38) vorgehaltenen Drucks des Hydraulikfluids ausgebildet ist.

6. Anordnung (33) nach einem der vorangehenden Ansprüche,
**dadurch gekennzeichnet, dass**
- der mit dem zweiten Ausgang (36) verbundene Hydraulikaktuator (50) zum Verstellen der Position einer Magnetschienenbremse (37) des Schienenfahrzeugs (30) eingerichtet ist.

7. Anordnung (33) nach einem der vorangehenden Ansprüche,
**dadurch gekennzeichnet, dass**
- der mit dem zweiten Ausgang (36) verbundene Hydraulikaktuator (50) zum Ansteuern von bewegbaren Karosserielementen und/oder einer Kupplung des Schienenfahrzeugs (30) eingerichtet ist.

8. Schienenfahrzeug (30) mit einer Anordnung (33), die nach einem der vorangehenden Ansprüche ausgebildet ist.

## Claims

1. An arrangement (33) for releasing a brake of a rail vehicle (30) having an electrohydraulic supply and control apparatus (34) which comprises a motor-operated pump (40) which is connected to a tank (42) which contains a hydraulic fluid, wherein the electrohydraulic supply and-control apparatus (34) has a first output (35) for providing at least one brake actuator of the brake with a pressure which is applied by the hydraulic fluid, wherein
- the electrohydraulic supply and control apparatus (34) is actively connected to a pressure store (38) in such a manner that the pressure store (38) on the one hand is connected to the pump (40) and on the other hand is connected to the first output (35) of the electrohydraulic supply and control apparatus (34); and
- the electrohydraulic supply and control apparatus (34) has a second output (36) for providing at least one hydraulic actuator (50) with the pressure which is applied by the hydraulic fluid, wherein the hydraulic actuator (50) is configured to perform an additional function of the rail vehicle (30); and
**characterized in that**
- the electrohydraulic supply and control apparatus (34) is constructed in such a manner that the first output (35) and the second output (36) can be acted on independently of each other with the pressure provided by the pressure store (38).

2. The arrangement (33) according to claim 1,
**characterized in that**
- the first output (35) and the second output (36) of the electrohydraulic supply and control apparatus (34) can be connected to the pressure store (38) in each case by means of at least one valve (47a, 47b), preferably by means of at least one 3/2-way valve.

3. The arrangement (33) according to one of the preceding claims,
**characterized in that**
- the electrohydraulic supply and control apparatus (34) is constructed at the first output (35) thereof for providing a pressure for releasing a brake of the rail vehicle (30) in a manner activated by resilient force.

4. The arrangement (33) according to one of the preceding claims,
**characterized in that**
the arrangement (33) is constructed for installation in a bogie (31) of the rail vehicle (30).

5. The arrangement (33) according to one of the preceding claims,
**characterized in that**
- the electrohydraulic supply and control apparatus (34) has a pressure switch (45) which is constructed for switching a motor (41) which drives the pump (40) in accordance with the hydraulic fluid pressure stored by the pressure store (38).

6. The arrangement (33) according to one of the preceding claims,
**characterized in that**
- the hydraulic actuator (50) which is connected to the second output (36) is configured to adjust the position of an electromagnetic rail brake (37) of the rail vehicle (30).

7. The arrangement (33) according to one of the preceding claims,
**characterized in that**
- the hydraulic actuator (50) which is connected to the second output (36) is configured to control movable body elements and/or a coupling of the rail vehicle (30).

8. A rail vehicle (30) having an arrangement (33) which is constructed according to one of the preceding claims.

## Revendications

1. Agencement (33) pour desserrer un frein d'un véhicule ferroviaire (30) avec un appareil d'alimentation et de commande électrohydraulique (34) qui comprend une pompe à moteur (40) qui est connectée à un réservoir (42) contenant du fluide hydraulique, dans lequel l'appareil d'alimentation et de commande électrohydraulique (34) présente une première sortie (35) pour appliquer une pression exercée par le fluide hydraulique sur au moins un actionneur de frein du frein, dans lequel
- l'appareil d'alimentation et de commande électrohydraulique (34) est en connexion active avec un accumulateur de pression (38) de sorte que l'accumulateur de pression (38) est connecté d'une part à la pompe (40) et d'autre part à la première sortie (35) de l'appareil d'alimentation et de commande électrohydraulique (34) ; et
- l'appareil électrohydraulique d'alimentation et de commande (34) présente une seconde sortie (36) pour appliquer la pression exercée par le fluide hydraulique sur l'au moins un actionneur hydraulique (50), dans lequel l'actionneur hydraulique (50) est configuré pour exercer une fonction supplémentaire du véhicule ferroviaire (30) ; et
**caractérisé en ce que**
- l'appareil d'alimentation et de commande électrohydraulique (34) est conçu de sorte que la première sortie (35) et la seconde sortie (36) peuvent être sollicitées indépendamment l'une de l'autre avec la pression fournie par l'accumulateur de pression (38).

2. Agencement (33) selon la revendication 1,
**caractérisé en ce que**
- la première sortie (35) et la seconde sortie (36) de l'appareil d'alimentation et de commande électrohydraulique (34) peuvent être connectées respectivement à l'accumulateur de pression (38) au moyen d'au moins une vanne (47a, 47b), respectivement de préférence au moyen d'une vanne à 3/2 voies.

3. Agencement (33) selon l'une quelconque des revendications précédentes,
**caractérisé en ce que**
- l'appareil électrohydraulique d'alimentation et de commande (34) est conçu, au niveau de sa première sortie (35), pour fournir une pression pour desserrer un frein à ressort du véhicule ferroviaire (30).

4. Agencement (33) selon l'une quelconque des revendications précédentes,
**caractérisé en ce que**
l'appareil (33) est conçu pour être monté dans un bogie (31) du véhicule ferroviaire (30).

5. Agencement (33) selon l'une quelconque des revendications précédentes,
**caractérisé en ce que**
- l'appareil d'alimentation et de commande électrohydraulique (34) présente un accumulateur de pression (45) qui est conçu pour commuter un moteur (41) entraînant la pompe (40) en fonction de la pression du fluide hydraulique maintenue par l'accumulateur de pression (38).

6. Agencement (33) selon l'une quelconque des revendications précédentes,
**caractérisé en ce que**
- l'actionneur hydraulique (50) connecté à la seconde sortie (36) est configuré pour régler la position d'un frein à rail magnétique (37) du véhicule ferroviaire (30).

7. Agencement (33) selon l'une quelconque des revendications précédentes,
**caractérisé en ce que**
- l'actionneur hydraulique (50) connecté à la seconde sortie (36) est configuré pour commander des éléments de carrosserie mobiles et/ou un attelage du véhicule ferroviaire (30).

8. Véhicule ferroviaire (30) avec un agencement (33) qui est conçu selon l'une quelconque des revendications précédentes.
